Europäisches Patentamt

European Patent Office

Office européen des brevets

(19)

(11) Veröffentlichungsnummer : **0 018 479**
**B1**

(12) **EUROPÄISCHE PATENTSCHRIFT**

(45) Veröffentlichungstag der Patentschrift :
**16.02.83**

(21) Anmeldenummer : **80101105.7**

(22) Anmeldetag : **05.03.80**

(51) Int. Cl.³ : **C 08 J    3/02, C 08 L    9/00**

(54) **Dispersionen von vernetztem Dienkautschuk und Verfahren zu ihrer Herstellung.**

(30) Priorität : **15.03.79 DE 2910168**

(43) Veröffentlichungstag der Anmeldung :
**12.11.80 Patentblatt 80/23**

(45) Bekanntmachung des Hinweises auf die Patenterteilung : **16.02.83 Patentblatt 83/07**

(84) Benannte Vertragsstaaten :
**BE DE FR GB IT NL**

(56) Entgegenhaltungen :
**Keine**

(73) Patentinhaber : **BAYER AG**
**Zentralbereich Patente, Marken und Lizenzen**
**D-5090 Leverkusen 1, Bayerwerk (DE)**

(72) Erfinder : **Lindner, Christian, Dr.**
**Riehler Strasse 200**
**D-5000 Köln 60 (DE)**
Erfinder : **Liebig, Lothar, Dr.**
**Walter-Flex-Strasse 19**
**D-5090 Leverkusen (DE)**
Erfinder : **Ott, Karl-Heinz, Dr.**
**Paul-Klee-Strasse 54**
**D-5090 Leverkusen (DE)**

Dispersionen von vernetzten Dienkautschuk und Verfahren zu ihrer Herstellung

Die Erfindung betrifft stabile, fließfähige Dispersionen von vernetzten, kautschukartigen Polymeren in organischen Flüssigkeiten und ein Verfahren zu ihrer Herstellung.

Wäßrige Dispersionen (Latices) von vernetzten und von unvernetzten kautschukartigenolymeren sind bekannt, sie werden meist durch Emulsionspolymerisation erhalten. Für manche Anwendungen braucht man aber stabile Dispersionen von diskreten Mikrogelteilchen aus Kautschuk in organischen Flüssigkeiten. Solche stabilen organischen Kautschukdispersionen können nicht direkt durch radikalische Polymerisation entsprechender Monomerer in organischen Flüssigkeiten hergestellt werden, weil sich während der Polymerisation keine diskreten Kautschukteilchen, sogenannte Mikrogelpartikel, ausbilden, sondern ein kontinuierliches Kautschuknetzwerk, ein Makrogel.

Der Erfindung liegt die Erkenntnis zugrunde, daß man wäßrige Emulsionen von vernetzten, kautschukartigen Dienpolymeren in bestimmten organischen Flüssigkeiten dispergieren kann, so daß die Dienpolymere als gequollene Teilchen dispers verteilt sind, und das Wasser der ursprünglichen Emulsion ebenfalls in der organischen Flüssigkeit dispergiert vorliegt (Wasser-in-Öl-Emulsion). Das Wasser kann, falls erforderlich, entfernt werden, indem man die Wasser-in-Öl-Emulsion selektiv bricht, und dann das Wasser mechanisch, physikalisch oder chemisch abtrennt. Für die meisten Anwendungen der erfindungsgemäßen organischen Kautschukdispersionen ist es nicht erforderlich, das Wasser abzutrennen, es muß allerdings stabil dispergiert sein und darf sich nicht als getrennte Phase abscheiden.

Gegenstand der Erfindung sind stabile, fließfähige Dispersionen von Kautschuken in Form diskreter Teilchen eines mittleren Durchmessers von 100 bis 3 000 nm in organischen, einen Dispergator enthaltenden Flüssigkeiten, die enthalten :

A. als Kautschuk 1 bis 20 Gew.-% (bezogen auf Gesamtdispersion) eines vernetzten Dienkautschuks ;

B. 0 bis 20 Gew.-% (bezogen auf Gesamtdispersion) Wasser in Form einer Wasser-in-Öl-Emulsion ;

C. als kontinuierliche organische Phase 99 bis 60 Gew.-% (bezogen auf Gesamtdispersion)

a) $C_1$-$C_{10}$-Alkylacrylate oder $C_1$-$C_{10}$-Alkylmethacrylate, vorzugsweise Methylmethacrylat, Ethylacrylat oder n-Hexylacrylat, oder

b) Gemisch aus 85 bis 50 Gew.-% Styrol oder α-Methylstyrol und 15 bis 50 Gew.-% Acrylnitril, Methacrylnitril oder $C_1$-$C_6$-Alkylacrylate oder $C_1$-$C_6$-Alkylmethacrylate, z. B. Methylmethacrylat, Ethylacrylat, n-Hexylacrylat, oder

c) Gemisch aus 85 bis 50 Gew.-% $C_1$-$C_{10}$-Alkylacrylat oder $C_1$-$C_{10}$-Alkylmethacrylat und 15 bis 50 Gew.-% Acrylnitril, Methacrylnitril und/oder Styrol,

wobei a), b) und c) bis zu 60 Gew.-% eines flüssigen Kohlenwasserstoffs zugemischt enthalten können.

Ein weiterer Gegenstand der Erfindung ist ein Verfahren zur Herstellung der stabilen fließfähigen Kautschukdispersion, das dadurch gekennzeichnet ist, daß man eine wäßrige Emulsion eines vernetzten Dienkautschuks mit einem mittleren Kautschukteilchendurchmesser von 100 bis 800 nm (ermittelt durch Lichtstreuung) in einer organischen Flüssigkeit als Dispergiermittel, die besteht aus

a) einem $C_1$-$C_{10}$-Alkylacrylat oder $C_1$-$C_{10}$-Alkylmethacrylat, oder

b) einem Gemisch aus 85 bis 50 Gew.-% Styrol oder α-Methylstyrol und 15 bis 50 Gew.-% Acrylnitril, Methacrylnitril oder $C_1$-$C_6$-Alkylacrylat oder $C_1$-$C_6$-Alkylmethacrylat, oder

c) einem Gemisch aus 85 bis 50 Gew.-% $C_1$-$C_{10}$-Alkylacrylat oder $C_1$-$C_{10}$-Alkylmethacrylat und 15 bis 50 Gew.-% Acrylnitril, Methacrylnitril und/oder Styrol,

wobei a), b) und c) bis zu 60 Gew.-% eines flüssigen Kohlenwasserstoffs zugemischt enthalten können, in Anwesenheit von 0,005 bis 4 Gew.-% eines Dispergators unter Agitation verteilt, und daß man unter weiterer Agitation ein Koaguliermittel für den Latex zufügt in einer zum Brechen des wäßrigen Latex ausreichenden Menge.

Die Dienkautschuke sind im allgemeinen stark vernetzt. Sie enthalten mindestens 50 Gew.-%, bevorzugt mehr als 70 Gew.-%, Gel. Die Kautschuke liegen im allgemeinen als durch Emulsionspolymerisation erhaltene wäßrige Kautschukdispersionen, als Latices, vor. Sie enthalten als Kautschuke bevorzugt Homopolymerisate von konjugierten Dienen mit 4-8 C-Atomen, wie Butadien, Isopren, Chloropren (Butadien ist besonders bevorzugt) oder deren Copolymerisate mit bis zu 40 Gew.-%, bevorzugt bis 10 Gew.-% einer Vinylverbindung, wie Acrylnitril, Methacrylnitril, Styrol, α-Methylstyrol, Halogenstyrole, $C_1$-$C_4$-Alkylstyrole, $C_1$-$C_6$-Alkylacrylate und -methacrylate, Acrylsäure, Methacrylsäure, Vinylsulfonsäure, Allylsulfonsäure, Alkylenglykoldi-acrylate und -methacrylate, Divinylbenzol.

Flüssige Kohlenwasserstoffe, die den Dispergiermitteln C) zugesetzt werden können, sind insbesondere aliphatische oder aromatische, gegebenenfalls halogenierte Kohlenwasserstoffe, beispielsweise Pentan, Hexan, cyclohexan, Heptan, niedermolekulare Paraffingemische, Benzol, Toluol, Xylol, bzw. deren Halogenderivate, z. B. Chloroform Methylenchlorid, Chlorbenzol, Dichlorbenzol, Dichlorethylen.

Zur Durchführung des Verfahrens zur Herstellung der Dispersionen suspendiert man einen Latex eines Dien-homo- oder -copolymerisats in einem der oben angegebenen Dispergiermittel. Man setzt dazu dem Dispergiermittel 0,005 bis 4 Gew.-% eines Dispergators zu. An sich kann man alle bekannten und üblichen Dispergatoren verwenden, besonders bevorzugt sind aber Acrylsäureester oder Methacrylsäureester, langkettiger Monoalkohol, partielle Umsetzungsprodukte aus Maleinsäure. γ-Olefincopolymerisaten und langkettigen Alkanolen, langkettige aliphatische Carbonsäuren, Harzsäuren, hochmolekulare

# 0 018 479

Alkohole, Ester, Ether und/oder Polyolefine, z. B. lösliche Polybutadiene. Das Suspendieren der Latices in den organischen Flüssigkeiten erfordert starkes Rühren. Im allgemeinen kann man etwa 3 bis 50 Gew.-Teile Latex in 100 Gew.-Teilen organische Flüssigkeit suspendieren. Da die Latices im allgemeinen 30 bis 60 Gew.-% Feststoff enthalten, bedeutet dies einen Kautschukgehalt von 1 bis 20 Gew.-% in der organischen Dispersion.

Anschließend fügt man unter Rühren zu der Kautschukemulsions-Suspension in der organischen Flüssigkeit ein Koagulierungsmittel zu, in einer Menge, die ausreicht, die wäßrige Emulsion des Kautschuks zu brechen. Normalerweise arbeitet man dabei mit einer Menge eines Koagulierungsmittels, die ungefähr 2 bis 20 Gew.-%, bezogen auf den Feststoffgehalt der zu dispergierenden wäßrigen Emulsion, ausmacht. Dabei bildet sich bei einer Temperatur von 0 bis 100 °C, vorzugsweise bei 20 bis 50 °C, sofort oder nach spätestens 1 Stunde die erfindungsgemäße Dispersion aus, die neben dem dispergierten Kautschuk Wasser als Wasser-in-Öl-Emulsion enthält.

Dieses Wasser kann, falls erwünscht, abgetrennt werden, indem man entweder (durch Zufügen von Elektrolyten, wie Säuren oder Basen) die Wasser-in-Öl-Emulsion selektiv bricht und das Wasser als separate Phase abtrennt, oder indem man das Wasser sofort, ohne Koagulation, azeotrop abdestilliert. Die wasserhaltigen, erfindungsgemäßen Kautschukdispersionen sehen mehr oder weniger milchig aus, die wasserfreien sind opak. Ihre Eigenviskosität kann durch Säuren oder Basen verändert werden.

Die organischen Dispersionen sind praktisch unempfindlich gegen Elektrolyte, Säuren oder Basen ; sie lassen sich mit großen Mengen bestimmter Lösungsmittel, z. B. aliphatischen Alkoholen, Ketonen (z. B. Aceton), Acetonitril, Dimethylformamid fällen.

Die erfindungsgemäßen Dispersionen lassen sich beispielsweise mit Hilfe von Radikalinitiatoren oder Redox-Initiatoren bei Raumtemperaturen von 0 bis 150 °C polymerisieren und aushärten. Wenn die Dispersionen zusätzlich noch Verstärkerfüllstoffe, Pigmente und so weiter enthalten, eignen sie sich zur Herstellung von schlagzähen Beschichtungen oder z. B. als Gießharze mit besonderen Eigenschaften, wie z. B. hoher Alterungsbeständigkeit.

## Beispiele

### Herstellung der wäßrigen Kautschuk-Emulsionen.

Die Herstellung von 1,3-Diolefin(co)polymerisat-Latices mithilfe eines Emulsionspolymerisationsverfahrens ist bekannt.

Folgende Emulsionen werden für die Dispergierversuche eingesetzt (Tabelle 1).

### Tabelle 1

| Beispiel | Art des Kautschuks | Kautschukgehalt** der Latices (Gew.-%) / Gelgehalt (Gew.-%)*** | Latex-teilchengröße* (nm) | pH-Wert |
|---|---|---|---|---|
| 1 | Polybutadien (BR) | 57 Gew.-% / 88 Gew.-% | 400 nm | alkalisch |
| 2 | Polybutadien (BR) | 60 Gew.-% / 91 Gew.-% | 100 nm | alkalisch |
| 3 | Polybutadien (BR) | 50 Gew.-% / 87 Gew.-% | 800 nm | alkalisch |
| 4 | Acrylnitril/ Butadien (NBR) | 49 Gew.-% / 80 Gew.-% | 350 nm | neutral |
| 5 | Butadien/ Styrol (SBR) | 50 Gew.-% / 74 Gew.-% | 300 nm | alkalisch |

*) gemessen mit Hilfe der Lichtstreuung ; siehe dazu : « Polymeranalytik », M. Hoffmann u. a., Georg Thieme Verlag, Stuttgart (1977) ;
**) bezogen auf die gesamte Gewichtsmenge der Emulsion ;
***) bezogen auf 100 Gew.-Teile des in Emulsion vorliegenden Kautschuks.

### Herstellung der erfindungsgemäßen Kautschukdispersionen

3

Allgemeine Vorschrift :

800 Gew.-Teile eines organischen Mediums werden mit X Gew.-Teilen eines Dispergators verrührt. Unter Rühren fügt man nun 200 Gew.-Teile der wäßrigen Kautschuk-Emulsionen (Beispiele 1 bis 5) hinzu. Anschließend gibt man in die Suspension Y Gew.-Teile eines Koagulierungsmittels und rührt Z Minuten bei Raumtemperatur, wobei sich die Kautschukdispersionen in organischen Medien ausbilden (Tabelle 2).

Tabelle 2

| Bei-spiel | Kaut-schuk-Emul-sion | Art des org.** Mediums | Art des Koagulie-rungsmittels in Y Gew.-Tln | Art des Dispergators in X Gew.-Tln*** | Rühr-zeit in Z min. | Kautschuk-teilchengröße* im org. Medium (nm) |
|---|---|---|---|---|---|---|
| 6 | 1 | 72 Gew.-% Styrol 28 Gew.-% Acrylnitril | 1 Essigsäure | 0,2 Dispergat. A | 10 | 740 |
| 7 | 2 | 28 Gew.-% Acrylnitril | 1 Essigsäure | 0,2 Dispergat. A | 10 | 200 |
| 8 | 3 | 28 Gew.-% Acrylnitril | 1 Essigsäure | 0,2 Dispergat. A | 10 | 1 450 |
| 9 | 4 | 28 Gew.-% Acrylnitril | 1 Essigsäure | 0,2 Dispergat. A | 10 | 560 |
| 10 | 5 | 28 Gew.-% Acrylnitril | 1 Essigsäure | 0,2 Dispergat. A | 10 | 490 |
| 11 | 1 | 28 Gew.-% Acrylnitril | 1 Essigsäure | 0,3 Dispergat. B | 10 | 745 |
| 12 | 1 | 28 Gew.-% Acrylnitril | 1 Essigsäure | 0,3 Dispergat. C | 10 | 735 |
| 13 | 1 | 100 Gew.-% Methyl-methacrylat | 1 Essigsäure | 0,2 Dispergat. A | 30 | 690 |
| 14 | 1 | 100 Gew.-% Methyl-methacrylat | 2 MgSO$_4$ | 0,2 Dispergat. A | 30 | 650 |
| 15 | 1 | 100 Gew.-% n-Butyl-acrylat | 1 Essigsäure | 0,2 Dispergat. A | 20 | 730 |
| 16 | 1 | 80 Gew.-% Styrol 20 Gew.-% tert.-Butylacrylat | 2 MgSO$_4$ | 0,1 Dispergat. A | 30 | 690 |
| 17 | 1 | 61 Gew.-% c-Hexan 28 Gew.-% Styrol 10 Gew.-% Acrylnitril | 2 Essigsäure | 4 Dispergat. A | 10 | 780 |

*) bestimmt bei kleineren Teilchen durch Lichtstreuung, bei größeren durch Lichtmikroskopie ;
**) %-Angaben bezogen auf 800 Gew.-Tle i. d. Allg. Vorschrift ;
***) zur Erläuterung der Dispergatoren siehe Tabelle 3.

Tabelle 3

In Tabelle 2 eingesetzte Dispergatoren
Typ
A = Umsetzungsprodukte von Maleinsäureanhydrid-1-Olefin-Copolymeren mit höheren Alkanolen (siehe dazu G. Sackmann u.a. Angew. Makromol. Chemie *69* (1978), Nr. 1041, Seiten 141-156) ;
B = Polydecylmethacrylat ;
C = Disproportionierte Abietinsäure.

**Ansprüche**

1. Stabile, fließfähige Dispersionen von Kautschuken in Form diskreter Teilchen eines mittleren Durchmessers von 100 bis 3 000 nm in organischen, einen Dispergator enthaltenden Flüssigkeiten, die enthalten :
A. als Kautschuk 1 bis 20 Gew.-% (bezogen auf Gesamtdispersion) eines vernetzten Dienkautschuks ;
B. 0 bis 20 Gew.-% (bezogen auf Gesamtdispersion) Wasser in Form einer Wasser-in-Öl-Emulsion ;
C. als kontinuierliche organische Phase 99 bis 60 Gew.-% (bezogen auf Gesamtdispersion)
a) $C_1$-$C_{10}$-Alkylacrylate oder $C_1$-$C_{10}$-Alkylmethacrylate, oder
b) Gemisch aus 85 bis 50 Gew.-% Styrol oder $\alpha$-Methylstyrol und 15 bis 50 Gew.-% Acrylnitril, Methacrylnitril oder $C_1$-$C_6$-Alkylacrylaten oder $C_1$-$C_6$-Alkylmethacrylaten, oder

**0 018 479**

c) Gemisch aus 85 bis 50 Gew.-% $C_1$-$C_{10}$-Alkylacrylat oder $C_1$-$C_{10}$-Alkylmethacrylat und 15 bis 50 Gew.-% Acrylnitril, Methacrylnitril und/oder Styrol,

wobei a), b) und c) bis zu 60 Gew.-% eines flüssigen Kohlenwasserstoffs zugemischt enthalten können.

2. Verfahren zur Herstellung der stabilen, fließfähigen Kautschukdispersion, dadurch gekennzeichnet, daß man eine wäßrige Emulsion eines vernetzten Dienkautschuks mit einem mittleren Kautschukteilchendurchmesser von 100 bis 800 nm (ermittelt durch Lichtstreuung) in einer organischen Flüssigkeit als Dispergiermittel, die besteht aus

a) einem $C_1$-$C_{10}$-Alkylacrylat oder $C_1$-$C_{10}$-Alkylmethacrylat, oder

b) einem Gemisch aus 85 bis 50 Gew.-% Styrol oder α-Methylstyrol und 15 bis 50 Gew.-% Acrylnitril oder Methacrylnitril oder $C_1$-$C_6$-Alkylacrylat oder $C_1$-$C_6$-Alkylmethacrylat, oder

c) einem Gemisch aus 85 bis 50 Gew.% $C_1$-$C_{10}$-Alkylacrylat oder $C_1$-$C_{10}$-Alkylmethacrylat und 15 bis 50 Gew.-% Acrylnitril, Methacrylnitril und/oder Styrol,

wobei a), b) und c) bis zu 60 Gew.-% eines flüssigen Kohlenwasserstoffs zugemischt enthalten können, in Anwesenheit von 0,005 bis 4 Gew.-% eines Dispergators unter Agitation verteilt, und daß man unter weiterer Agitation ein Koaguliermittel für den Latex zufügt in einer zum Brechen des wäßrigen Latex ausreichenden Menge.

**Claims**

1. Stable, free-flowing dispersions of rubbers in the form of discrete particles having an average diameter of from 100 to 3 000 nm in organic liquids containing a dispersant, which contain :

A. as rubber, 1 to 20 % by weight (based on the total dispersion) of a cross-linked diene rubber ;

B. 0 to 20 % by weight (based on the total dispersion) of water in the form of a water-in-oil emulsion ;

C. as the continuous organic phase, 99 to 60 % by weight (based on the total dispersion) of

a) $C_1$-$C_{10}$ alkyl acrylates or $C_1$-$C_{10}$ alkyl methacrylates, or

b) a mixture of 85 to 50 % by weight of styrene or α-methyl styrene and 15 to 50 % by weight of acrylonitrile, methacrylonitrile or $C_1$-$C_6$ alkyl acrylates or $C_1$-$C_6$ alkyl methacrylates, or

c) a mixture of 85 to 50 % by weight of $C_1$-$C_{10}$ alkyl acrylate or $C_1$-$C_{10}$ alkyl methacrylate and 15 to 50 % by weight of acrylonitrile, methacrylonitrile and/or styrene,

it being possible for up to 60 % by weight of a liquid hydrocarbon to be added to and mixed with a), b) and c).

2. Process for the production of the stable, free-flowing rubber dispersion, characterised in that an aqueous emulsion of a cross-linked diene rubber having an average rubber particle diameter of from 100 to 800 nm (as determined by light scattering) is dispersed with stirring in an organic liquid as the dispersion medium, which consists of

a) a $C_1$-$C_{10}$ alkyl acrylate or $C_1$-$C_{10}$ alkyl methacrylate, or

b) a mixture of 85 to 50 % by weight of styrene or α-methyl styrene and 15 to 50 % by weight of acrylonitrile or methacrylonitrile or $C_1$-$C_6$ alkyl acrylate or $C_1$-$C_6$ alkyl methacrylate, or

c) a mixture of 85 to 50 % by weight of $C_1$-$C_{10}$ alkyl acrylate or $C_1$-$C_{10}$ alkyl methacrylate and 15 to 50 % by weight of acrylonitrile, methacrylonitrile and/or styrene,

it being possible for up to 60 % by weight of a liquid hydrocarbon to be added to and mixed with a), b) and c), in the presence of 0.005 to 4 % by weight of a dispersant and in that a coagulation agent for the latex is added with continued stirring in a quantity sufficient to break the aqueous latex.

**Revendications**

1. Dispersions fluides stables de caoutchoucs sous la forme de particules discrètes d'un diamètre moyen de 100 à 3 000 nm dans des liquides organiques renfermant un dispersant, qui contiennent :

A. comme caoutchouc, 1 à 20 % en poids (par rapport à la dispersion totale) d'un caoutchouc diénique réticulé ;

B. 0 à 20 % en poids (par rapport à la dispersion totale) d'eau sous la forme d'une émulsion eau-dans-huile ;

C. comme phase organique continue, 99 à 60 % en poids (par rapport à la dispersion totale)

a) d'un acrylate d'alkyle en $C_1$ à $C_{10}$ ou d'un méthacrylate d'alkyle en $C_1$ à $C_{10}$, ou

b) d'un mélange de 85 à 50 % en poids de styrène ou d'α-méthylstyrène et de 15 à 50 % en poids d'acrylonitrile, de méthacrylonitrile ou d'acrylates d'alkyle en $C_1$ à $C_6$ ou de méthacrylates d'alkyle en $C_1$ à $C_6$, ou

c) d'un mélange de 85 à 50 % en poids d'acrylate d'alkyle en $C_1$ à $C_{10}$ ou de méthacrylate d'alkyle en $C_1$ à $C_{10}$ et de 15 à 50 % en poids d'acrylonitrile, de méthacrylonitrile et/ou de styrène,

les composants a), b) et c) pouvant contenir en mélange jusqu'à 60 % en poids d'un hydrocarbure liquide.

2. Procédé de production de la dispersion de caoutchouc fluide stable, caractérisé en ce qu'on répartit sous agitation en présence de 0,005 à 4 % en poids d'un dispersant, une émulsion aqueuse d'un

5

**0 018 479**

caoutchouc diénique réticulé ayant un diamètre moyen des particules de caoutchouc de 100 à 800 nm (déterminé par diffusion de la lumière) dans un liquide organique utilisé comme milieu de dispersion, qui est constitué par

a) un acrylate d'alkyle en $C_1$ à $C_{10}$ ou un méthacrylate d'alkyle en $C_1$ à $C_{10}$, ou

b) un mélange de 85 à 50 % en poids de styrène ou d'$\alpha$-méthylstyrène et de 15 à 50 % en poids d'acrylonitrile ou de méthacrylonitrile ou d'acrylate d'alkyle en $C_1$ à $C_6$ ou de méthacrylate d'alkyle en $C_1$ à $C_6$, ou

c) un mélange de 85 à 50 % en poids d'acrylate d'alkyle en $C_1$ à $C_{10}$ ou de méthacrylate d'alkyle en $C_1$ à $C_{10}$ et de 15 à 50 % en poids d'acrylonitrile, de méthacrylonitrile et/ou de styrène,

les composants a), b) et c) pouvant contenir en mélange jusqu'à 60 % en poids d'un hydrocarbure liquide, et en ce qu'on ajoute, sans cesser d'agiter, un agent de coagulation du latex en une quantité suffisante pour rompre le latex aqueux.

6